# EUROPÄISCHE PATENTSCHRIFT

(11) **EP 1 892 427 B1**
(45) Veröffentlichungstag und Bekanntmachung des Hinweises auf die Patenterteilung: **19.11.2014**
(21) Anmeldenummer: 07016256.5
(22) Anmeldetag: 20.08.2007
(51) Int. Cl.: F16B 37/06, B21J 15/00, B23P 19/00

(54) **Befestigungselement und Verfahren zur Anbringung dieses Befestigungselements an einem Blechbauteil**
Fastening element and method of mounting such fastening element to a sheet metal element
Élément de fixation et procédure de fixation de cet élément de fixation à un élément de tôle metallique

(30) Priorität: 21.08.2006 DE 102006039699
(43) Veröffentlichungstag der Anmeldung: 27.02.2008
(73) Patentinhaber: Arnold & Shinjo GmbH & Co. KG, 74677 Dörzbach (DE)
(72) Erfinder: Beck, Friedrich, 74613 Öhringen-Verrenberg (DE)
(74) Vertreter: Patentanwälte Ruff, Wilhelm, Beier, Dauster & Partner

(56) Entgegenhaltungen:
- WO-A1-01/91937
- DE-U1- 29 724 109
- US-A- 2 026 757

## Beschreibung

Die Erfindung betrifft ein Befestigungselement und ein Verfahren zur Anbringung dieses Befestigungselements an einem Blechbauteil.

Es besteht häufig die Notwendigkeit, an aus Blech bestehenden Bauteilen andere Dinge anzubringen, wobei diese Anbringung nicht bei der Herstellung des Blechbauteils erfolgen soll, sondern später. Darüber hinaus soll die Anbringung auch lösbar sein. Die Möglichkeit, Gegenstände an einem Blechbauteil anzuschrauben, ist deswegen keine Lösung, da die Bleche zu dünn sind, um dort tragfähige Gewinde einzuschneiden.

Ursprünglich wurden in solchen Fällen Muttern oder Bolzen an den Blechbauteilen angeschweißt. Dies ist aber eine sehr aufwändige Verfahrensweise.

Anstelle des Anschweißens von Muttern sind auch so genannte Einstanzmuttern bekannt. Bei einer bekannten Einstanzmutter (FR 2607562) ist auf der einen Seite der Mutter eine Nut gebildet, die um eine Gewindebohrung herum verläuft. Die äußere Nutflanke verläuft rechtwinklig zum Nutgrund, und die innere Nutflanke verläuft so, dass die Öffnung der Nut schmaler ist als der Nutgrund. Die innere Nutflanke bildet eine scharfe Kante. Solche Einstanzmuttern werden auf ein Blechteil gelegt und unter Aufwendung von Druck durch das Blech hindurch gestanzt. Dabei bildet sich ein Loch, und das Blech rings um das gestanzte Loch verformt sich in die Nut hinein. Dadurch erfolgt eine Festlegung der Mutter an dem Blech, wobei das Blech sich allerdings stark verformt. Dies ist für das Festhalten der Mutter erforderlich.

Einstanzvorgänge dieser Art sind dann möglich, wenn das Blech keine zu hohe Festigkeit aufweist. Bei Blechbauteilen aus hochfestem Blech oder auch aus dickerem Blech sind diese Vorgänge nicht möglich.

Es ist bereits ein Befestigungselement mit einem Korpus, einem Flansch und einem Ansatz bekannt, bei dem der Flansch eine ringförmige Anlagefläche bildet, die mit strahlenförmig verlaufenden Rippen versehen ist (DE 29724109 U). Dieses Befestigungselement wird in einem zweistufigen Vorgang mit einem Blech verbunden, wobei im ersten Vorgang die Rippen in die Oberfläche des Blechs eingepresst werden und in einem zweiten Vorgang von der gegenüberliegenden Seite her die Umfangswand durch ein kombiniertes Schneiden und Pressen umgeformt wird.

Weiterhin ist ein Niet mit einem Abstandshalter zur Herstellung einer Nietverbindung zwischen zwei Teilen mit gegenseitigem Abstand bekannt, der zum Ausgleich von Toleranzen mehr oder weniger weit in eine Eindrückung eingepresst werden kann (WO 01/91937 A1).

Der Erfindung liegt die Aufgabe zu Grunde, eine Möglichkeit zu schaffen, Befestigungselemente an Blechteilen anzubringen, bei denen es sich auch um Blechteile aus höherwertigem und hochfestem Blech handelt.

Zur Lösung dieser Aufgabe schlägt die Erfindung ein Befestigungselement mit den im Anspruch 1 genannten Merkmalen vor. Die Erfindung schlägt ebenfalls ein Verfahren zum Anbringen eines solchen Befestigungselements mit den im Anspruch 11 genannten Merkmalen vor. Weiterbildungen der Erfindung sind Gegenstand der jeweils abhängigen Patentansprüche.

Das von der Erfindung vorgeschlagene Befestigungselement enthält also an dem Korpus einen Flansch, der auf seiner einen Seite eine ringförmige Anlagefläche bildet. Diese Anlagefläche ist zur Anlage an der einen Seite des Blechbauteils bestimmt. Falls das Blechbauteil in diesem Bereich eben ist, ist also die Anlagefläche ebenfalls vorzugsweise eben. Der Ansatz ragt von dieser Anlagefläche ab. Dieser Ansatz greift durch ein Loch in dem Blechbauteil hindurch. Von der anderen Seite her wird dieser Ansatz so verformt, dass er auf der Seite des Blechs anliegt, die der Anlagefläche des Flanschs abgewandt ist. An dem Korpus ist ein Befestigungsmittel vorgesehen, das zur Befestigung des zu befestigenden Gegenstands dient.

In Weiterbildung der Erfindung ist vorgesehen sein, dass auf der der Anlagefläche des Flanschs abgewandten Seite des Korpus eine Vertiefung ausgebildet ist, deren Durchmesser etwa dem Außendurchmesser des durch das Loch hindurch greifenden Ansatzes entspricht. Diese Vertiefung ist sehr flach ausgebildet. Sie kann dazu dienen, die beim Verpressen des Befestigungselements entstehende Verformung anzuzeigen. Wenn die Verformungskräfte ausreichend groß sind, verringert sich diese Vertiefung, sie kann sogar ganz verschwinden.

Der durch das Loch hindurch ragende Ansatz weist in Weiterbildung der Erfindung vorzugsweise eine mit axialem Abstand von der Anlagefläche des Flanschs angeordnete Angriffsfläche für ein Schälwerkzeug auf. Die Verformung des Befestigungselements zu seiner Festlegung an dem Blechbauteil kann mithilfe eines Schäl-Werkzeugs eingeleitet werden.

Insbesondere kann vorgesehen sein, dass diese Angriffsfläche für das Schälwerkzeug senkrecht zur Achse des Befestigungselements verläuft. Dann vereinfacht sich die Bewegung des Werkzeugs, mit dem das Verformen geschieht.

In nochmaliger Weiterbildung der Erfindung kann vorgesehen sein, dass diese Angriffsfläche von der Stirnseite des Ansatzes gebildet wird.

Befestigungselemente dieser Art müssen nicht nur axial gesichert sein, sondern auch in Umfangsrichtung. Es ist daher möglich, Befestigungselemente zu verwenden, bei denen der Ansatz und/oder der Flansch eine von der Kreisform abweichende Form aufweisen, also beispielsweise ein Viereck oder ein Sechseck bilden. Insbesondere kann der Flansch auf seiner Anlagefläche auch Vorsprünge aufweisen, die in das Blech eingepresst werden.

Es ist aber ebenfalls möglich und liegt im Rahmen der Erfindung, dass der Ansatz des Korpus und/oder der Flansch zylindrisch ausgebildet sind, insbesondere kreiszylindrisch.

Bei der bekannten Einstanzmutter ist als einziges Befestigungsmittel an der Einstanzmutter eine Gewindebohrung möglich. Bei dem Befestigungselement, das die Erfindung vorschlägt, sind auch andere Befestigungsmittel möglich. Beispielsweise kann das Befestigungsmittel eine Bohrung in dem Korpus aufweisen, insbesondere eine durchgehende Bohrung. Diese Bohrung kann glattflächig ausgebildet sein, wenn sie als Lagerbohrung dienen soll. Sie kann auch stufenförmig ausgebildet sein, wenn darin beispielsweise eine stufenförmige Achse gelagert werden soll.

Es ist ebenfalls möglich, dass das Befestigungsmittel eine mit einem Gewinde versehene Bohrung aufweist.

In Weiterbildung kann ebenfalls vorgesehen sein, dass das Befestigungsmittel ein an dem Ansatz vorgesehener Zapfen ist, bei dem es sich beispielsweise um einen glatten Zapfen, gegebenenfalls auch einen stufenförmigen Zapfen handeln kann. Auch dieser kann zum Lagern von Elementen dienen.

Ebenfalls möglich ist es auch, dass der Zapfen ein Gewinde aufweist.

Das Befestigungselement wird nach der Lehre der Erfindung folgendermaßen angebracht. In dem Blechbauteil, an dem das Befestigungselement angebracht werden soll, wird an der vorgesehenen Stelle ein Loch gebildet. Dieses Loch kann gestanzt oder gebohrt werden. Es kann eine runde oder unrunde Form aufweisen. In das Loch wird das Befestigungselement mit seinem Ansatz eingesetzt, bis die an dem Flansch gebildete Anlagefläche an der einen Seite des Blechbauteils anliegt. Das Loch ist natürlich auf den Ansatz abgestimmt, oder umgekehrt. Von der anderen Seite her, also von der Seite, an der der Flansch nicht anliegt, wird der Randbereich des Ansatzes über einen Teil der Höhe des Ansatzes abgeschält, um dadurch einen Wulst aus dem Material des Ansatzes zu bilden. Dieser Wulst wird anschließend bis zur Anlage an der Oberseite des Blechbauteils verformt und dort verpresst. Damit ist eine Art Vernietung des Befestigungselements an dem Blechbauteil hergestellt.

Der Ansatz bleibt dabei über seine gesamte Höhe vorhanden, er ist nur in seinem äußeren Randbereich dünner geworden. Dieser äußere Randbereich wird also zur Befestigung verwendet.

Zum Erleichtern des Abschälens kann in Weiterbildung vorgesehen sein, dass eine Ringkerbe in die Stirnseite des Ansatzes eingebracht wird.

In Weiterbildung der Erfindung kann vorgesehen sein, dass das Abschälen längs des Umfangs gleichzeitig erfolgt.

Hierzu kann insbesondere ein Hohlstempel verwendet werden, der das Material abschält und einen Wulst bildet.

Erfindungsgemäß kann vorgesehen sein, dass der beim Abschälen gebildete Wulst aus dem Material des Befestigungselements in einem zweiten Vorgang flach gedrückt wird.

Es ist auch denkbar, in einem dritten Arbeitsgang noch eine spezielle Verformung des flach gepressten Wulstes durchzuführen, um bestimmte Erscheinungsbilder zu bewirken.

In Weiterbildung der Erfindung kann vorgesehen sein, dass ein Befestigungselement mit einer auf der dem Ansatz abgewandten Seite vorhandenen Vertiefung verwendet wird. Das Verschwinden der Vertiefung oder die Verringerung der Tiefe der Vertiefung kann als Merkmal für die Güte der Verbreitung verwendet werden.

Darüber hinaus kann diese Vertiefung dazu dienen, dafür zu sorgen, dass ein in der Innenbohrung vorhandenes Gewinde nicht verformt wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
Figur 1 einen Schnitt durch ein Befestigungselement nach einer ersten Ausführungsform der Erfindung;
Figur 2 ein der Figur 1 entsprechendes Schnittbild einer zweiten Ausführungsform;
Figur 3 das in einem Blechbauteil eingesetzte und befestigte Befestigungselement;
Figur 4 einen Axialschnitt durch einen Hohlstempel zum Durchführen des Verfahrens;
Figur 5 eine vergrößerte Darstellung eines Teils des Hohlstempels der Figur 4;
Figur 6 einen Axialschnitt durch einen Hohlstempel für einen zweiten Verfahrenvorgang;
Figur 7 einen Axialschnitt durch einen Hohlstempel für einen dritten Verfahrensschritt;
Figur 8 die Zuordnung zwischen Befestigungselement, Blechteil und Stempel vor Beginn der Verarbeitung;
Figur 9 den Vorgang in einem zweiten Stadium;
Figur 10 den Vorgang in einem dritten Stadium;
Figur 11 den Vorgang in einem vierten Stadium.

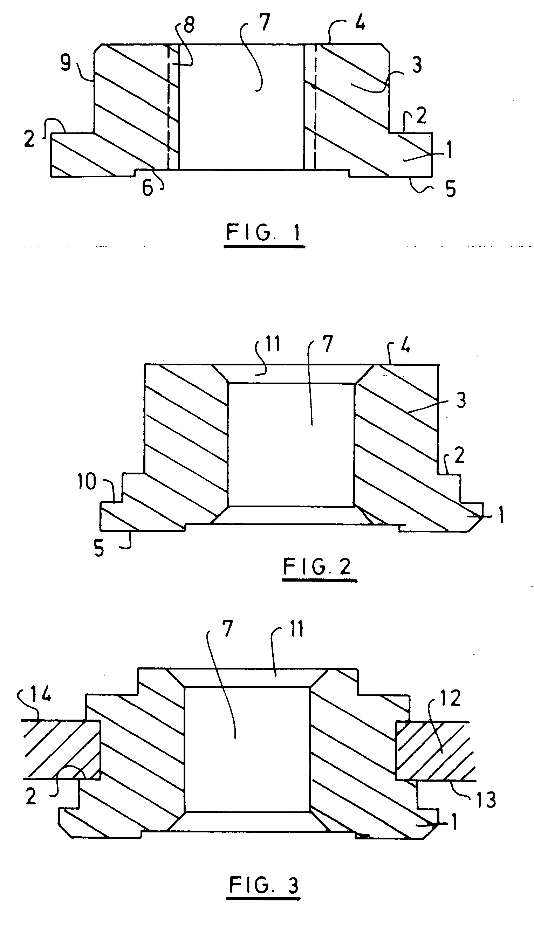

Figur 1 zeigt einen Axialschnitt durch ein Befestigungselement nach einer ersten Ausführungsform der Erfindung. Das Befestigungselement enthält einen einstückigen Korpus, der im Bereich seines einen axialen Endes einen Flansch 1 aufweist. Dieser Flansch 1 weist auf der in Figur 1 oberen Seite eine ringförmige Anlagefläche 2 auf. Im dargestellten Beispiel ist diese ringförmige Anlagefläche 2 eben. Von dieser ebenen Anlagefläche 2 erstreckt sich ein Ansatz 3 nach oben, das heißt von der Anlagefläche 2 weg. Dieser Ansatz 3 bildet ebenfalls eine ebene Stirnseite 4. Der Querschnitt dieses Befestigungselements ist kreisrund.

Auf der der ringförmigen Anlagefläche 2 abgewandten Seite des Befestigungselements ist eine ebene Begrenzungsfläche 5 gebildet, die konzentrisch zum Außenumfang eine Vertiefung 6 aufweist. Diese Vertiefung ist sehr flach.

Als Befestigungsmittel für das Befestigungselement 1 ist eine Innenbohrung 7 in dem Befestigungselement ausgebildet, die ein Gewinde 8 aufweist.

Anstelle eines kreisrunden Querschnitts könnte auch ein mehrkantiger Querschnitt gegeben sein.

Die Mantelfläche 9 des Ansatzes 3 ist auf jeden Fall zylindrisch in dem Sinne, dass die Querschnittsform einen Umfang aufweist, der sich über die Höhe des Ansatzes 3 nicht ändert.

Figur 2 zeigt ein ähnliches Befestigungselement, bei dem der Flansch 1 stufenförmig ausgebildet ist und zusätzlich zu der Anlagefläche 2 eine weitere Anlagefläche 10 aufweist. Im dargestellten Beispiel ist die Innenbohrung 7 ohne ein Gewinde ausgebildet. Es kann sich beispielsweise um eine glattflächige Lagerbohrung handeln. Die Bohrung 7 ist auf beiden Seiten mit einer Fase 11 versehen.

Figur 3 zeigt, wie das Befestigungselement der Figur 2 in dem Loch eines Blechbauteils 12 eingesetzt und verpresst ist. Es liegt mit der Anlagefläche 2 des Flanschs 1 an einer Oberfläche 13 des Blechbauteils 12 an. Auf der gegenüberliegenden Seite ist das Material des Ansatzes 3 in einem Randbereich abgeschält und auf die entsprechende Oberfläche 14 des Blechbauteils 12 herab gedrückt, so dass eine Art Vernietung zwischen dem Befestigungselement und dem Blechbauteil 12 durchgeführt wurde.

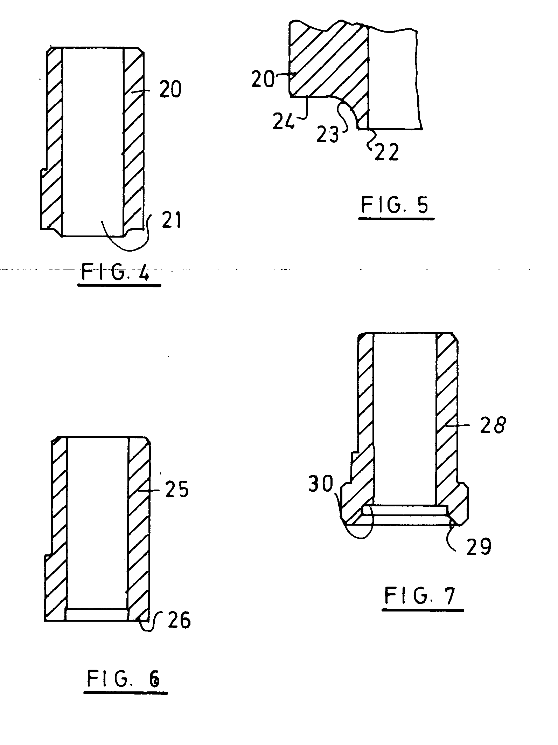

Figur 4 zeigt in einem gegenüber den Figuren 1 bis 3 verkleinerten Maßstab einen Axialschnitt durch einen Hohlstempel 20, wie er zu Durchführung des Verfahrens nach der Erfindung verwendet wird. Die aktive Seite dieses Hohlstempels 20 ist in Figur 4 unten. Die Innenöffnung 21 des Hohlstempels 20 bildet an dem aktiven Ende eine scharfe Kante 22, siehe auch Figur 5. Mit einem geringen radialen Abstand von dieser scharfen Kante 22 verläuft die Außenseite des Hohlstempels in einem bogenförmigen Bereich 23 bis in eine Fläche 24, die quer zur Längsachse des Hohlstempels 20 verläuft. Diese scharfe Kante 22 erzeugt beim Einpressen auf den Ansatz 3 zunächst eine Kerbe und schält anschließend das Material so, dass es den bogenförmigen Bereich 23 entlang bis zu der Fläche 24 aufgeworfen wird.

Während der Hohlstempel 20 der Figur 4 und 5 zum Beginn des Verbindungsvorgangs verwendet wird, zeigt Figur 6 einen Hohlstempel 25, bei dem das aktive Ende eine ebene Fläche 26 enthält.

Figur 7 zeigt einen Hohlstempel 28, bei dem das aktive, also ebenfalls untere Ende stufenförmig ausgebildet ist, wobei am äußeren Bereich eine Schrägfläche 29 vorgesehen ist. An die Schrägfläche 29 schließt sich eine Stufe 30 an, die einen etwas größeren Durchmesser als der Innendurchmesser des Hohlstempels 28 aufweist.

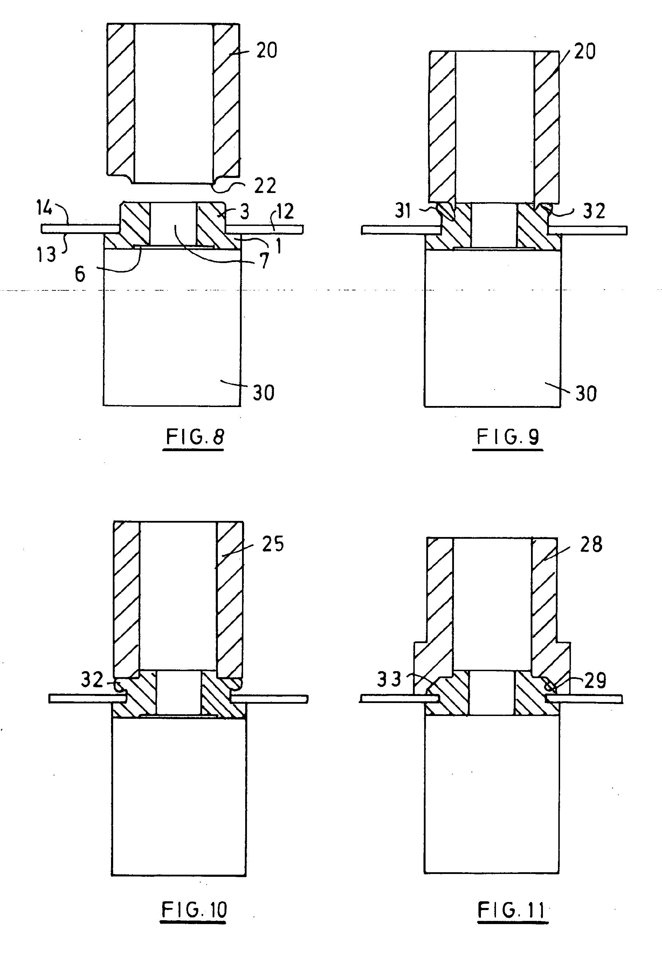

Nun zu der Darstellung der Befestigungsvorgänge nach den Figuren 8 bis 11.

Das Befestigungselement der Figur 1 ist auf eine Unterlage 30 aufgelegt. Es liegt mit seiner unteren Fläche 5 auf dieser Unterlage 30 auf. Auf das Befestigungselement ist das Blechteil 12 aufgelegt, so dass der Ansatz 3 durch die Öffnung des Blechteils 12 hindurchgreift. Das Blechbauteil 12 liegt auf der Anlagefläche 2 des Befestigungselements auf. Jetzt wird von oben der Hohlstempel 20 abgesenkt und beginnt seine Arbeit. Die scharfe Kante 22 erzeugt eine Kerbe 31 und schält einen bestimmten Bereich des Materials des Ansatzes 3 ab. Dies ist in Figur 9 dargestellt. Nach dem Abschälen ist ein Wulst 32 gebildet, der natürlich noch fest an dem Ansatz 3 angebracht ist. Dieser Wulst 32 wird dann, nachdem der Stempel 20 zurückgezogen wurde, mithilfe des zweiten Stempels 25 flach gepresst, siehe Figur 10. Es wird also auf der Oberseite des Wulstes 32 eine Fläche gebildet, die quer zur Längsachse verläuft und eine glatte Schulter bildet. Je nach Erfordernis kann diese Verformung noch weitergetrieben werden, indem der Stempel 25 noch weiter in Richtung auf die Unterlage 30 bewegt wird, so dass die Unterseite des Wulstes 32 fest mit der Oberseite 14 des Blechbauteils 12 verpresst wird.

Es ist aber auch möglich, wie dies die Figur 11 zeigt, dass ein letzter Verformungsvorgang mithilfe des Hohlstempels 28 durchgeführt wird, der die erwähnte Stufe an der Oberseite des Wulstes 32 im radial inneren Bereich belässt, die äußere Form des Wulstes 32 aber in eine schräg verlaufende Kegelfläche 33 umformt. Dies ist in Figur 11 als Ergebnis dargestellt. Jetzt kann der Stempel 28 zurückgezogen werden, und das Befestigungselement ist fest mit dem Blechbauteil 12 verbunden.

Wie die Figur 11 ebenfalls zeigt, ist im letzten Schritt des Verfahrens aufgrund der hohen axialen Kräfte die Vertiefung 6 an der Unterseite 5 des Befestigungselements so flach gedrückt worden, dass sie nicht mehr zu sehen ist.

## Patentansprüche

1. Befestigungselement, das
1.1 einen Korpus mit
1.2 einem Flansch (1) aufweist, der
1.3 auf seiner einen Seite eine ringförmige Anlagefläche (2) aufweist,
1.4 über die ein Ansatz (3) vorspringt, und
1.5 an dem ein Befestigungsmittel vorgesehen ist, wobei
1.6 auf der der Anlagefläche (2) des Flanschs (1) abgewandten Seite (5) des Korpus eine Begrenzungsfläche (5) mit einer Vertiefung (6) gebildet ist und
1.7 **die Mantelfläche (9) des Ansatzes (3) zylindrisch ausgebildet ist.**

2. Befestigungselement nach Anspruch 1, bei dem der Durchmesserder Vertiefung (6) etwa dem Außendurchmesser des Ansatzes (3) entspricht.

3. Befestigungselement nach Anspruch 1 oder 2, bei dem der Ansatz (3) eine mit axialem Abstand von der Anlagefläche (2) des Flanschs (1) angeordnete Angriffsfläche für ein Schälwerkzeug (20) aufweist.

4. Befestigungselement nach Anspruch 3, bei dem die Angriffsfläche senkrecht zu der Achse des Befestigungselements verläuft.

5. Befestigungselement nach Anspruch 3 oder 4, bei dem die Angriffsfläche von der Stirnseite (4) des Ansatzes (3) gebildet wird.

6. Befestigungselement nach einem der vorhergehenden Ansprüche, bei dem der Ansatz (3) und/oder der Flansch (1) zylindrisch ausgebildet ist, insbesondere kreiszylindrisch.

7. Befestigungselement nach einem der vorhergehenden Ansprüche, bei dem das Befestigungsmittel eine Bohrung (7) in dem Korpus aufweist, insbesondere eine durchgehende Bohrung (7).

8. Befestigungselement nach Anspruch 7, bei dem die Bohrung (7) ein Gewinde (8) aufweist.

9. Befestigungselement nach einem der vorhergehenden Ansprüche, bei dem das Befestigungsmittel ein an dem Ansatz (3) vorgesehener Zapfen ist.

10. Befestigungselement nach Anspruch 9, bei dem der Zapfen ein Gewinde aufweist.

11. Verfahren zum Anbringen eines Befestigungselements nach einem der vorhergehenden Ansprüche an einem Blechbauteil (12), mit folgenden Verfahrensschritten:
11.1 in dem Blechbauteil (12) wird ein Loch gebildet,
11.2 das Befestigungselement wird in das Loch bis zur Anlage seiner Anlagefläche (2) an der Oberfläche (13) des Blechbauteils (12) eingesetzt,
11.3 von der anderen Seite her wird der Randbereich des Ansatzes (3) über einen Teil der Höhe des Ansatzes (3) abgeschält,
11.4 der abgeschälte Teil wird gegen die Oberseite (14) des Blechbauteils (12) verpresst und
11.5 das Verschwinden der Vertiefung (6) nach dem Verpressen wird als Merkmal für die Güte der Vorpressung verwendet.

12. Verfahren nach Anspruch 11, bei dem zur Erleichterung des Abschälens eine Ringkerbe (31) in die Stirnseite (4) des Ansatzes (3) des Befestigungselements eingebracht wird.

13. Verfahren nach Anspruch 11 oder 12, bei dem das Abschälen längs des Umfangs gleichzeitig erfolgt.

14. Verfahren nach einem der Ansprüche 11 bis 13, bei dem zum Abschälen ein Hohlstempel (20, 25, 28) verwendet wird.

15. Verfahren nach einem der Ansprüche 11 bis 14, bei dem ein beim Abschälen gebildeter Wulst (32) in einem zweiten Vorgang flachgedrückt wird.

## Claims

1. A fastening element, comprising
1.1 a corpus having
1.2 a flange (1) provided with
1.3 an annular bearing surface (2) on its one side with
1.4 a projection (3) protruding therefrom, and
1.5 provided with a fastening means, wherein
1.6 on the side (5) of the corpus facing away from the bearing surface (2) of the flange (1) a limiting surface (5) including a recess (6) is formed, and
1.7 the lateral surface (9) of the projection (3) is cylindrical.

2. The fastening element according to claim 1, wherein the diameter of the recess (6) is approximately correspondent to the outer diameter of the projection (3).

3. The fastening element according to claim 1 or 2, wherein the projection (3) presents an engagement surface for a skiving tool (20) arranged at an axial distance to the bearing surface (2) of the flange (1).

4. The fastening element according to claim 3, wherein the engagement surface extends perpendicular to the axis of the fastening element.

5. The fastening element according to claim 3 or 4, wherein the engagement surface is constituted by the front end (4) of the projection (3).

6. The fastening element according to any one of the preceding claims, wherein the projection (3) and/or the flange (1) are/is cylindrical, in particular circular cylindrical.

7. The fastening element according to any one of the preceding claims, wherein the fastening element has a hole (7) in the corpus, in particular a through hole (7).

8. The fastening element according to claim 7, wherein the hole (7) is provided with a thread (8).

9. The fastening element according to any one of the preceding claims, wherein the fastening means is a pin provided on the projection (3).

10. The fastening element according to claim 9, wherein the pin is provided with a thread.

11. A method of mounting a fastening element according to any one of the preceding claims to a sheet metal component (12), comprising the following method steps:
11.1 forming a hole in the sheet metal component (12),
11.2 inserting the fastening element into the hole up to abutment of its bearing surface (2) on the top surface (13) of the sheet metal component (12),
11.3 skiving the periphery of the projection (3) over part of the height of the projection (3) from the other side,
11.4 pressing the skived part against the top side (14) of the sheet metal component (12), and
11.5 utilizing removal of the recess (6) after pressing as an attribute for the quality of pressing.

12. The method according to claim 11, wherein to facilitate skiving an annular notch (31) is introduced in the front end (4) of the projection (3) of the fastening element.

13. The method according to claim 11 or 12, wherein skiving is performed simultaneously along the circumference.

14. The method according to any one of the claims 11 to 13, wherein a hollow punch (20, 25, 28) is used for skiving.

15. The method according to any one of the claims 11 to 14, wherein a bead (32) formed during skiving is flattened during a second procedure.

## Revendications

1. Élément de fixation présentant
1.1 un corps comprenant
1.2 une bride (1) qui
1.3 présente, sur l'un de ses côtés, une surface d'appui annulaire (2),
1.4 au-delà de laquelle fait saillie une partie saillante (3), et
1.5 sur laquelle est prévu un moyen de fixation,
1.6 une surface de limitation (5) étant formée avec un renfoncement (6) sur le côté (5) du corps opposé à la surface d'appui (2) de la bride (1) et
1.7 la surface d'enveloppe (9) de la partie saillante (3) étant réalisée sous forme cylindrique.

2. Élément de fixation selon la revendication 1, dans lequel le diamètre du renfoncement (6) correspond approximativement au diamètre extérieur de la partie saillante (3).

3. Élément de fixation selon la revendication 1 ou 2, dans lequel la partie saillante (3) présente une surface d'engagement pour un outil de pelage (20) disposée à distance axiale de la surface d'appui (2) de la bride (1).

4. Élément de fixation selon la revendication 3, dans lequel la surface d'engagement s'étend perpendiculairement à l'axe de l'élément de fixation.

5. Élément de fixation selon la revendication 3 ou 4, dans lequel la surface d'engagement est formée par le côté frontal (4) de la partie saillante (3).

6. Élément de fixation selon l'une quelconque des revendications précédentes, dans lequel la partie saillante (3) et/ou la bride (1) sont réalisées sous forme cylindrique, en particulier sous forme cylindrique circulaire.

7. Élément de fixation selon l'une quelconque des revendications précédentes, dans lequel le moyen de fixation présente un alésage (7) dans le corps, en particulier un alésage traversant (7).

8. Élément de fixation selon la revendication 7, dans lequel l'alésage (7) présente un filetage (8).

9. Élément de fixation selon l'une quelconque des revendications précédentes, dans lequel l'élément de fixation est un tourillon prévu sur la partie saillante (3).

10. Élément de fixation selon la revendication 9, dans lequel le tourillon présente un filetage.

11. Procédé pour appliquer un élément de fixation selon l'une quelconque des revendications précédentes contre un composant en tôle (12), comprenant les étapes de procédé suivantes :
11.1 un trou est formé dans le composant en tôle (12),
11.2 l'élément de fixation est inséré dans le trou jusqu'à ce que sa surface d'appui (2) vienne en appui contre la surface (13) du composant en tôle (12),
11.3 la région de bord de la partie saillante (3) est pelée à partir de l'autre côté sur une partie de la hauteur de la partie saillante (3),
11.4 la partie pelée est pressée contre le côté supérieur (14) du composant en tôle (12) et
11.5 la disparition du renfoncement (6) après le pressage est utilisée comme caractéristique de la qualité du pressage.

12. Procédé selon la revendication 11, dans lequel, pour faciliter le pelage, une encoche annulaire (31) est pratiquée dans le côté frontal (4) de la partie saillante (3) de l'élément de fixation.

13. Procédé selon la revendication 11 ou 12, dans lequel le pelage s'effectue simultanément le long de la périphérie.

14. Procédé selon l'une quelconque des revendications 11 à 13, dans lequel on utilise un poinçon creux (20, 25, 28) pour le pelage.

15. Procédé selon l'une quelconque des revendications 11 à 14, dans lequel un bourrelet (32) formé lors du pelage est pressé à plat dans une deuxième opération.
